# EUROPEAN PATENT SPECIFICATION

(11) **EP 1 014 713 B1**
(45) Date of publication and mention of the grant of the patent: **13.03.2002**
(21) Application number: 99124069.8
(22) Date of filing: 10.12.1999
(51) Int. Cl.: H04N 5/445

(54) **Method and apparatus for providing OSD data for OSD display in a video signal having an encoded format**
Verfahren und Vorrichtung zur Erzeugung von OSD Daten in einem Videosignal mit kodiertem Format
Méthode et appareil pour la formation de données d'affichage a l'écran dans un signal vidéo ayant un format code

(30) Priority: 21.12.1998 EP 98250444
(43) Date of publication of application: 28.06.2000
(73) Proprietor: DEUTSCHE THOMSON-BRANDT GMBH, 78048 Villingen-Schwenningen (DE)
(72) Inventor: Adolph, Dirk, 30953 Ronnenberg (DE); Winter, Marco, 30173 Hannover (DE)
(74) Representative: Hartnack, Wolfgang, Dipl.-Ing.

(56) References cited:
- EP-A- 0 810 783
- EP-A- 0 840 512
- WO-A-96/19077
- WO-A-96/38007
- US-A- 5 828 791
- ZON-YIN SHAE ET AL: "MIXING AND PLAYBACK OF JPEG COMPRESSED PACKET VIDEOS" COMMUNICATION FOR GLOBAL USERS, INCLUDING A COMMUNICATIONS THEORY MINI CONFERENCE ORLANDO, DEC. 6 - 9, 1992, vol. 1, 6 December 1992 (1992-12-06), pages 245-249, XP000357793 INSTITUTE OF ELECTRICAL AND ELECTRONICS ENGINEERS

## Description

The invention relates to a method and to an apparatus for providing OSD data for OSD display in a video signal having an encoded format.

### Background

TVs and other consumer electronics (CE) devices like VCRs and DVD players use on-screen display (OSD) of messages intended for making the control of the TV's operation parameters more convenient for the user. Also, a subtitling feature is desirable.
For such purposes an additional hardware is required for visualising e.g. user commands. This hardware includes a video memory and a video mixer. The video memory stores the OSD text or graphic to be displayed. For display, the video mixer combines the stored OSD text or graphic with the pictures of the program currently broadcast or replayed.

WO-A-96/38007 discloses the storage of pre-encoded OSD font characters as MPEG macroblock data in MPEG intra mode as a character bitstream each. When a frame of OSD messages needs to be encoded, the character bitstreams are read from the storage medium and cascaded to form a valid OSD message bitstream including multiple slice start codes, one for each macroblock, in order to sever the correlation between the DC coefficients of succeeding DC coefficients of the macroblocks.
Zon-Yin Shae et al.: 'Mixing and Playback of JPEG Compressed Packet Videos', GLOBECOM'92 Dec.6-9, 1992, ORLANDO, COMMUNICATION FOR GLOBAL USERS, Vol. 1, 6 December 1992, pages 246 - 249, XP000357793, INSTITUTE OF ELECTRICAL AND ELECTRONICS ENGINEERS, shows the mixing of pixel block based video data from two or more sources in the JPEG compressed data domain, followed by decompression and display of the joint data stream.

### Invention

Some CE devices like Set-Top Boxes or DVD players already include an MPEG decoder according to the ISO/IEC standards 11172 and 13818. Such MPEG decoders are available as chips, e.g. the MPEG2 decoder IC STi3520A of SGS-Thomson. In connection with such devices it is possible to omit for OSD purposes the above mentioned video mixer and thereby to reduce pretty expensive hardware. As explained below it is also possible to thereby reduce the required memory capacity which again makes the CE device cheaper.

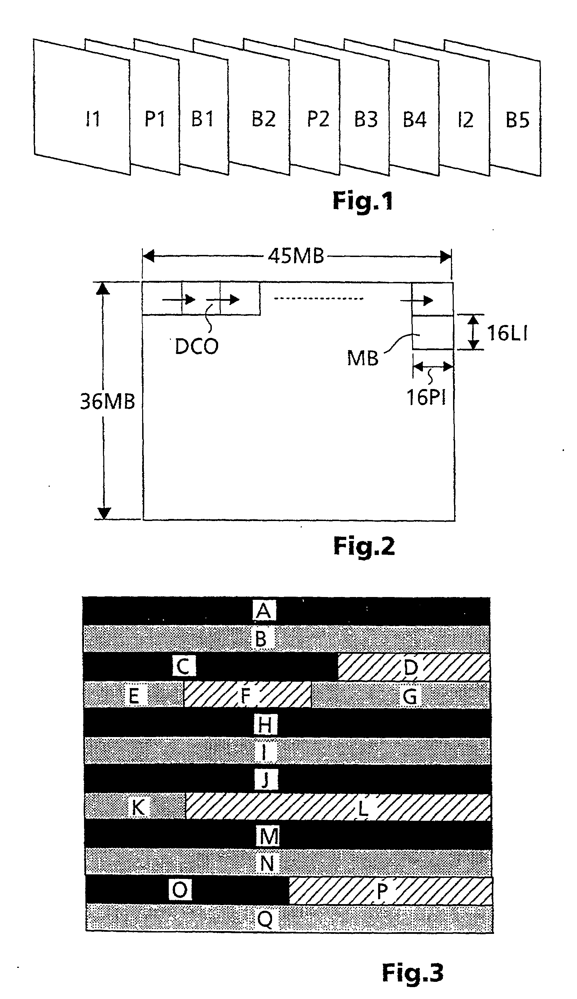

As depicted in Fig. 1 an MPEG video signal consists of a sequence of pictures of intraframe type I1, I2, ..., predicted type P1, P2, ..., and bi-directionally predicted type B1, B2, B3, B4, B5, ....
Fig. 2 shows that each picture is formed from macroblocks MB which have a size of 16 lines LI with 16 pixels PI each. The picture may consist of 36 rows and 45 columns of such macroblocks. For some countries a picture has 30 rows of macroblocks. The decoding order DCO of the macroblocks begins in the top left corner of the pictures.

According to the invention the picture content of an OSD text or graphic is stored in a non-volatile memory, e.g. a ROM, in a specific format: the OSD text or graphic content is divided into macroblock units and the OSD macroblock data are stored in MPEG encoded form in said non-volatile memory. Such macroblocks are of I-type.

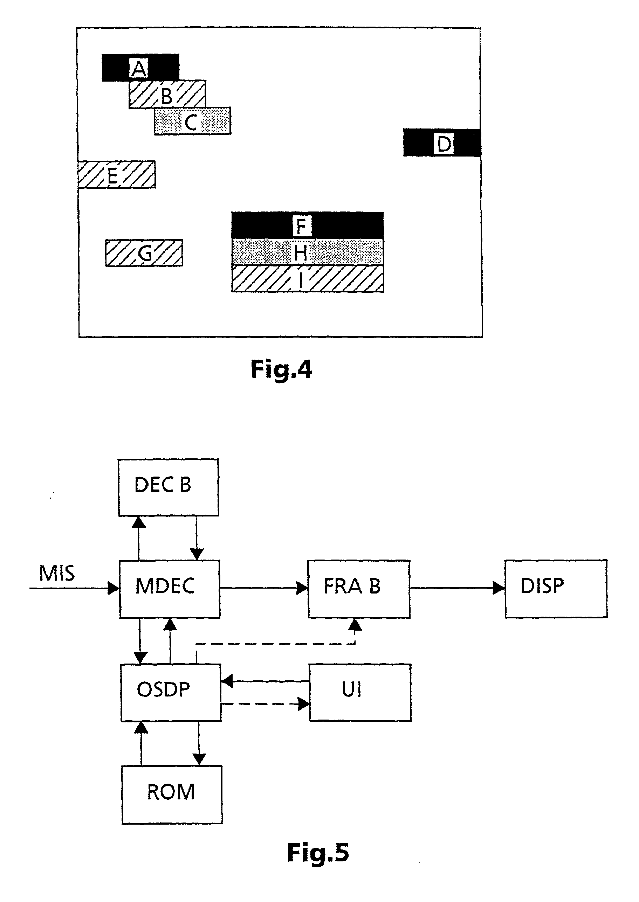

Thereby the feature is used that an MPEG picture is partitioned into slices as depicted in Fig. 3, example slices A to Q. A slice is a series of an arbitrary number of consecutive macroblocks. The first and last macroblocks of a slice are not skipped macroblocks. Every slice contains at least one macroblock. Slices do not overlap. The position of slices may change from picture to picture. The first and last macroblock of a slice are in the same horizontal row of macroblocks. Slices occur in the bitstream in the order in which they are encountered, starting at the upper-left of the picture and proceeding by raster-scan order from left to right and top to bottom. In the slice header, information is stored on the position in the picture the current slice is located. Normally, each macroblock in a picture is enclosed in a slice.
It is not necessary that the slices cover the entire picture, as shown in Fig. 4, example slices A to I. Those areas in a specific picture that are not enclosed in a slice are not encoded.

According to the invention an OSD can have the shape of a slice, e.g. like slices F, H and/or I in Fig. 4. In order to display OSDs in an MPEG-decoded picture one can decode (with or without the data of the macroblocks to be overlaid by the OSD) a video frame first and store it in the frame memory. Thereafter a video frame consisting (only) of the OSD macroblocks is decoded using an MPEG decoder, and is written at corresponding address values into that frame memory which holds the previously MPEG decoded video frame. Then the combined frame memory content is read and displayed as a complete video picture.

The invention has the advantage, that no complex hardware like a video mixing device is necessary for processing OSD data. On one side the memory space necessary for OSD purposes is distinctly reduced due to the fact that the OSD macroblock data are stored in compressed form. On the other side it is also possible to use high-quality graphic for OSDs due to the compressed-format storage. Normally, OSDs have a low colour resolution only so that the required memory capacity is further reduced.

It is one object of the invention to disclose a method for providing OSD data for OSD display in a video signal having an encoded format. This object is achieved by the method disclosed in claim 1.

It is a further object of the invention to disclose an apparatus which utilises the inventive method. This object is achieved by the apparatus disclosed in claim 11.

In principle, the inventive method is suited for providing OSD data for OSD display in a video signal having an encoded format, wherein the picture content of an OSD text or graphic or picture to be displayed is stored in that encoded format in a memory and is for the purpose of display correspondingly decoded and replaces at the OSD display area the matching area of the correspondingly decoded video signal, and wherein the encoded format is a format using data reduction. Advantageously said data reduction format is the MPEG format and the encoded format of said OSD text or graphic or picture to be displayed are MPEG macroblocks of I-type, wherein the OSD macroblocks to be displayed form at least one MPEG slice.

Advantageous additional embodiments of the inventive method are disclosed in the respective dependent claims.

In principle the inventive apparatus provides OSD data for OSD display in a video signal having an encoded format wherein the encoded format is a format using data reduction, and includes:
- a memory in which the picture content of an OSD text or graphic or picture to be displayed is stored in that encoded format;
- means for assembling OSD data to be decoded from said memory according to a request from an interface;
- decoding means for decoding said video signal and for decoding said assembled OSD data for the purpose of display;
- picture memory means in which pictures of said decoded video signal are stored for subsequent display and in which at the OSD display area said decoded OSD data replace said decoded video signal.

Advantageous additional embodiments of the inventive apparatus are disclosed in the respective dependent claims.

### Drawings

Embodiments of the invention are described with reference to the accompanying drawings, which show in:
- Fig. 1: sequence of pictures of different type;
- Fig. 2: arrangement of macroblocks in a picture;
- Fig. 3: picture with a first partition into slices;
- Fig. 4: picture with a second partition into slices, suited for OSD purposes;
- Fig. 5: a decoder with OSD feature;
- Fig. 6: OSD processor in more detail;
- Fig. 7: example of a set of pre-encoded macroblock data for a volume bar which are stored in the ROM;
- Fig. 8: examples of volume bars displayable with a set according to Fig. 7.

### Exemplary embodiments

In Fig. 5 an MPEG video input signal MIS is fed to an MPEG video decoder MDEC. MDEC interacts with a decoder buffer DECB which serves e.g. for collecting the required input data stream data packets and for presenting the decoded data at the correct presentation time. The output signal of MDEC is intermediately stored in a picture memory, i.e. a frame or field buffer FRAB, before being fed to a display DISP. A memory ROM stores OSD data in a compressed format which corresponds to the MPEG macroblock format. Controlled by a user interface UI the OSD data to be displayed become selected. UI may be a remote control or a PC. An OSD processor OSDP interacts with UI, with MDEC and with ROM. According to the OSD content desired by UI, OSDP selects the corresponding macroblock data from ROM, arranges it as a slice or as slices and loads these slice data into MDEC. The desired position of the OSD data within the pictures is taken from the header information of the OSD slices.

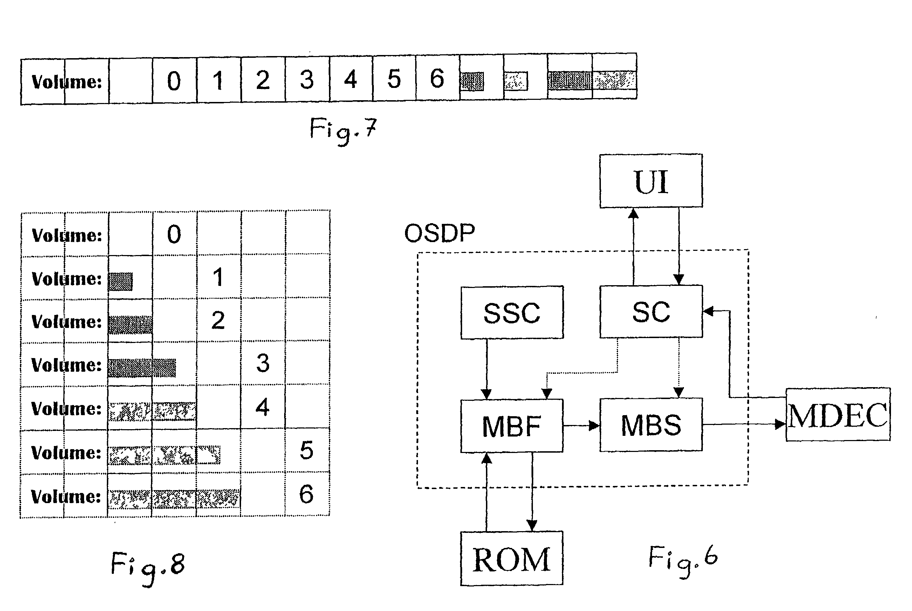

As shown in Fig. 6, OSDP may include a state control SC, a slice start code generator SSC, a macroblock fetcher MBF and a macroblock splicer MBS working together to create OSD macroblock slices requested by user interface UI. All blocks within the OSDP are under control of the SC which itself interacts with UI and gets status information including slice information from MDEC. When beginning the generation of an OSD macroblock slice, the MBF takes the slice start code from SSC and sends it to MBS. After the slice start code, the MBF fetches according to the OSD status different macroblocks from the OSD ROM. These macroblocks are arranged by MBS to generate the final output order, e.g. one of the seven volume bar examples of the spliced macro patterns depicted in Fig. 8 when using an example set of pre-encoded volume bar macroblock data shown in Fig. 7 which are stored in ROM. The OSD slice output data are fed to MDEC. Advantageously, the encoded OSD data with horizontally adjacent OSD macroblocks form together a slice with only one slice start code. As a futher advantage, the encoded OSD macroblock data can use less bit-consuming DC coefficients based on differential DC coefficients.
The OSD slice is finished in accordance with a new slice start code related to the following macro blocks of the original picture content. When the OSD slice content remains unchanged and active in the following pictures, it is possible to skip the OSD slice macroblocks for the following pictures because they are already available in the previously decoded picture frame. The related motion vectors are zero and the OSD macro-block picture content is replaced by the OSD macroblock data already decoded with the corresponding initial frame.

It is also possible to write the OSD data coming from OSDP directly into the decoder buffer DECB at address values required by the decoding order with respect to the location of the OSD slices in the picture and thereby to prevent decoding of the original picture data located at the position of the OSD slices.

However, such OSD data insertion is not possible in case of moving picture content in the MIS input signal in the vicinity of the location of the OSD slices.

In case of special OSD content like e.g. a simple bar the length of which correlates with the current loudness setting, which can be generated easily as a picture content, it may be advantageous to not store it in MPEG decoded format in ROM but to generate it separately in OSDP and to write it directly into FRAB.

A further advantage of the invention is that the decoded picture quality of the OSD display can be varied within a wide range according to the desired application. E.g. simple messages or symbols can be decoded with limited quality (using e.g. coarse inverse quantisation) resulting in a faster display, whereas OSD pictures can be decoded with high quality (using e.g. fine inverse quantisation).

For special applications it is also possible to generate the encoded OSD data on-the-fly using an MPEG encoder, or to load the OSD data from elsewhere, e.g. a separate data carrier or from the Internet, whereby the OSD data memory ROM can be a RAM.

The invention can be used in connection with ISO/IEC standards 11172 (MPEG1), 13818 (MPEG2), and 14496 (MPEG4), and with other video signal coding standards.
It is also possible to store together with, or instead of, the coded video subtitle a corresponding audio "subtitle" or jingle in coded form. This audio code becomes decoded and is either mixed with the normal audio sound or replaces the normal audio sound for a short period of time when the subtitle is displayed or the jingle is presented. The audio code can be e.g. MPEG1 Layer 1 to 3, MPEG2, MPEG2-AAC, MPEG4, AC-3, PAC/MPAC/EPAC, DTS.

## Claims

1. Method of providing OSD data for OSD display, wherein the picture content of different OSD characters or texts or graphics or pictures to be displayed (DISP) is stored in an MPEG I-type macroblock encoded format each in an OSD data memory (ROM), and is for the purpose of display correspondingly assembled and decoded (MDEC), **characterised in that**:
- an MPEG decoded (MDEC) picture to be displayed together with selected (UI) ones of said different OSD characters or texts or graphics or pictures inserted is intermediately stored in a picture memory (FRAB);
- multiple horizontally adjacent ones of said assembled encoded OSD macroblocks form a slice (F, H, I) that includes only one slice start code and that is decoded (MDEC) and intermediately stored in said picture memory (FRAB) at corresponding address values;
- the thus combined picture memory content is read as a complete picture to be displayed.

2. Method according to claim 1, wherein the encoded OSD macroblock data use less bit-consuming DC coefficients based on differential DC coefficients.

3. Method according to claim 1 or 2, wherein the OSD macroblocks to be decoded in a following picture or pictures with the OSD content still active are skipped and the related motion vectors are zero and the OSD macroblock picture content is replaced by the OSD macroblock data already decoded with the corresponding initial frame.

4. Method according to any of claims 1 to 3, wherein the OSD macroblocks to be decoded become assembled according to the request from an user interface (UI).

5. Method according to any of claims 1 to 4, wherein in case of special OSD content like e.g. a simple bar the required OSD data is not stored in said OSD data memory (ROM) but is generated separately (OSDP) and is written directly into said picture memory (FRAB).

6. Method according to any of claims 1 to 5, wherein in addition encoded audio data are stored in said OSD data memory (ROM) and are selected and decoded in connection with said OSD data.

7. Apparatus for providing OSD data for OSD display, wherein the picture content of different OSD characters or texts or graphics or pictures to be displayed (DISP) is stored in an MPEG I-type macroblock encoded format each in an OSD data memory (ROM), and is for the purpose of display correspondingly assembled and decoded (MDEC), the apparatus including:
- means (OSDP) for assembling selected (UI) ones of multiple horizontally adjacent ones of OSD macroblocks from said OSD data memory, and for forming therefrom a slice (F, H, I) that includes only one slice start code;
- decoding means (MDEC) for decoding an MPEG decoded picture to be displayed together with said selected ones of said different OSD characters or texts or graphics or pictures inserted, and for decoding said slice of OSD macroblocks;
- a picture memory (FRAB) into which said MPEG decoded picture is intermediately stored and into which said decoded slice of OSD macroblocks is intermediately stored at corresponding address values,
wherein the thus combined picture memory content is read as a complete picture to be displayed.

8. Apparatus according to claim 7, wherein the encoded OSD macroblock data use less bit-consuming DC coefficients based on differential DC coefficients.

9. Apparatus according to claim 7 or 8, wherein the OSD macroblocks to be decoded in a following picture or pictures with the OSD content still active are skipped and the related motion vectors are zero and the OSD macro-block picture content is replaced by the OSD macroblock data already decoded with the corresponding initial frame.

10. Apparatus according to one of claims 7 to 9, wherein in case of special OSD content like e.g. a simple bar the required OSD data is not stored in said OSD data memory (ROM) but is generated separately (OSDP) and is written directly into said picture memory (FRAB).

11. Method according to one of claims 1 to 6, wherein the OSD data for said OSD data memory is loaded from a separate data carrier or from the Internet.

## Patentansprüche

1. Verfahren zum Erzeugen von OSD-Daten für OSD-Anzeige, wobei der Bildinhalt von verschiedenen anzuzeigenden OSD-Zeichen oder -Texten oder -Grafiken (DISP) in Form von Makroblöcken vom I-Typ in gemäß MPEG-kodiertem Format jeweils in einem OSD-Datenspeicher (ROM) gespeichert wird, und zum Zwecke der Anzeige entsprechend zusammengefügt und dekodiert (MDEC) wird, **dadurch gekennzeichnet, daß**
- ein MPEG-dekodiertes (MDEC) zusammen mit ausgewählten (UI) der verschiedenen eingefügten OSD-Zeichen oder-Texten oder -Grafiken oder -Bildern anzuzeigendes Bild in einem Bildspeicher (FRAB) zwischengespeichert wird;
- mehrere horizontal benachbarte der zusammengefügten kodierten OSD-Makroblöcke einen Rechteckausschnitt (Slice) (F, H, I) bilden, der nur einen Slice-Start-Code enthält, und der dekodiert (MDEC) und in dem Bildspeicher (FRAB) an entsprechenden Adressenwerten zwischengespeichert wird;
- der so kombinierte Bildspeicherinhalt als vollständiges anzuzeigendes Bild gelesen wird.

2. Verfahren nach Anspruch 1, bei dem die kodierten OSD-Makroblockdaten weniger Bit-verbrauchende Gleichstrom-Koeffizienten auf der Basis von differenziellen Gleichstromkomponenten verwenden.

3. Verfahren nach Anspruch 1 oder 2, bei dem die OSD-Makroblöcke, die in einem folgenden Bild oder folgenden Bildern mit dem noch aktiven OSD-Inhalt dekodiert werden sollen, ausgelassen werden, und die bezogenen Bewegungssektoren Null sind, und bei dem der OSD-Makroblock-Bildinhalt durch die OSD-Makroblockdaten ersetzt wird, die bereits mit dem entsprechenden anfänglichen Vollbild dekodiert wurden.

4. Verfahren nach einem der Ansprüche 1 - 3, bei dem die zu dekodierenden OSD-Makroblöcke gemäß der Anforderung von einer Benutzerschnittstelle (UI) zusammengefügt werden.

5. Verfahren nach einem der Ansprüche 1 - 4, bei dem im Fall eines speziellen OSD-Inhalts, wie z. B. einem einfachen Balken, die erforderlichen OSD-Daten nicht in den OSD-Datenspeicher (ROM) gespeichert werden, sondern getrennt erzeugt (OSDP) und direkt in den Bildspeicher (FRAB) eingeschrieben werden.

6. Verfahren nach einem der Ansprüche 1 - 5, bei dem zusätzlich kodierte Audio-Daten in dem OSD-Datenspeicher (ROM) gespeichert und in Verbindung mit den OSD-Daten ausgewählt und dekodiert werden.

7. Vorrichtung zur Erzeugung von OSD-Daten zur OSD-Anzeige, wobei der Bildinhalt von verschiedenen anzuzeigenden OSD-Zeichen oder -Texten oder -Grafiken oder
- Bildern (DISP) in Form von Makroblöcken vom I-Typ in gemäß MPEG-kodiertem Format jeweils in einem OSD-Datenspeicher (ROM) gespeichert wird, und zum Zwecke der Anzeige entsprechend zusammengefügt und dekodiert (MDEC) wird, wobei die Vorrichtung enthält:
- Mittel (OSDP) zum Zusammenfügen von aus mehrfachen horizontal benachbarten OSD-Makroblöcken ausgewählten Makroblöcken aus dem OSD-Datenspeicher, und um daraus einen Rechteckausschnitt (Slice) (F, H, I) zu bilden, der nur einen Rechteck-Ausschnitt-Startcode enthält;
- Dekodiermittel (MDEC) zum Dekodieren eines MPEG-dekodierten anzuzeigenden Bildes zusammen mit den ausgewählten verschiedenen eingefügten OSD-Zeichen oder-Texten oder -Grafiken oder -Bildern, und um den Rechteckausschnitt von OSD-Makroblöcken zu dekodieren;
- einen Bildspeicher (FRAB), in dem das MPEG-dekodierte Bild zwischengespeichert wird, und in dem die dekodierte Rechteckscheibe von OSD-Makroblöcken an entsprechenden Adressenwerten zwischengespeichert wird;
- wobei der so kombinierte Bildspeicherinhalt als vollständiges anzuzeigendes Bild gelesen wird.

8. Vorrichtung nach Anspruch 7, bei der die kodierten OSD-Makroblockdaten weniger Bit-verbrauchende Gleichstrom-Koeffizienten auf der Basis von differenziellen Gleichstrom-Koeffizienten verwenden.

9. Vorrichtung nach Anspruch 7 oder 8, bei der die in einem folgenden Bild oder folgenden Bildern mit noch aktivem OSD-Inhalt zu dekodierenden Makroblöcke ausgelassen werden und die bezogenen Bewegungsvektoren Null sind und der OSD-Makroblock-Bildinhalt durch die OSD-Makroblockdaten ersetzt wird, die bereits mit dem entsprechenden anfänglichen Vollbild dekodiert wurden.

10. Vorrichtung nach einem der Ansprüche 7 - 9, bei der im Fall eines speziellen OSD-Inhalts, z.B. eines einfachen Balkens, die benötigten OSD-Daten nicht in dem OSD-Datenspeicher (ROM) gespeichert werden, sondern getrennt erzeugt (OSDP) und unmittelbar in den Bildspeicher (FRAB) geschrieben werden.

11. Verfahren nach einem der ansprüche 1 - 6, bei dem die OSD-Daten für den OSD-Datenspeicher von einem getrennten Datenträger oder vom Internet geladen werden.

## Revendications

1. Méthode pour la formation de données d'affichage à l'écran dans laquelle le contenu image de différents caractères, textes, graphiques ou images à afficher à l'écran (DISP) est stocké au format code dans un macrobloc MPEG de type I, dans une mémoire de données d'affichage à l'écran (ROM), puis regroupé et décodé (MDEC) en conséquence à des fins d'affichage, **caractérisée en ce que :**
- une image MPEG décodée (MDEC) à afficher avec différents caractères, textes, graphiques ou images d'affichage à l'écran sélectionnés (UI) et insérés est stockée provisoirement dans une mémoire d'image (FRAB) ;
- plusieurs macroblocs codés d'affichage à l'écran horizontalement adjacents forment un segment (F, H, I) qui inclut au moins un code de départ de segment et qui est décodé (MDEC) et temporairement stocké dans une mémoire d'image (FRAB) au niveau des valeurs d'adresse correspondantes ;
- le contenu combiné de la mémoire d'image est lu comme une image complète à afficher.

2. Méthode conforme à la revendication 1, dans laquelle les données macroblocs d'affichage à l'écran utilisent des coefficients DC consommant moins de mémoire, basés sur des coefficients DC différentiels.

3. Méthode conforme à la revendication 1 ou 2, dans laquelle les macroblocs d'affichage à l'écran à décoder dans une ou plusieurs images suivantes tandis que le contenu d'affichage à l'écran est toujours actif sont ignorés, les vecteurs de mouvement associés sont nuls et le contenu image des macroblocs d'affichage à l'écran est remplacé par les données macroblocs qui sont déjà décodées avec la trame initiale correspondante.

4. Méthode conforme aux revendications 1 à 3, dans laquelle les macroblocs d'affichage à l'écran à décoder sont regroupés conformément à la demande émanant d'une interface utilisateur (UI).

5. Méthode conforme aux revendications 1 à 4, dans laquelle, dans le cas d'un contenu d'affichage à l'écran spécial tel qu'une barre simple, les données d'affichage à l'écran requises ne sont pas stockées dans la mémoire de données d'affichage à l'écran (ROM), mais générées séparément (OSDP) et enregistrées directement dans la mémoire d'image (FRAB).

6. Méthode conforme aux revendications 1 à 5, dans laquelle des données audio codées sont stockées en supplément dans une mémoire de données d'affichage à l'écran, et sélectionnées et décodées en relation avec les données d'affichage à l'écran.

7. Appareil pour la formation de données d'affichage à l'écran dans lequel le contenu image de différents caractères, textes, graphiques ou images à afficher à l'écran (DISP) est stocké au format code dans des macroblocs MPEG de type I, dans une mémoire de données d'affichage à l'écran (ROM), puis regroupé et décodé (MDEC) en conséquence, incluant les éléments suivants :
- dispositif (OSPF) de regroupement de plusieurs macroblocs d'affichage à l'écran horizontalement adjacents sélectionnés (Ul) dans une mémoire de données d'affichage à l'écran pour la formation d'un segment (F, H, I) incluant un seul code de départ de segment ;
- dispositif de décodage (MDEC) d'une image MPEG décodée à afficher avec différents caractères, textes, graphiques ou images d'affichage à l'écran sélectionnés et insérés, et de décodage de segment des macroblocs d'affichage à l'écran ;
- mémoire d'image (FRAB) dans laquelle des images MPEG décodées et des segments de macroblocs d'affichage à l'écran (au niveau des valeurs d'adresse correspondantes) sont temporairement stockés, et dont le contenu combiné est lu comme une image complète à afficher.

8. Appareil conforme à la revendication 7, dans lequel les données macroblocs d'affichage à l'écran utilisent des coefficients DC consommant moins de mémoire, basés sur des coefficients DC différentiels.

9. Appareil conforme à la revendication 7 ou 8, dans lequel les macroblocs d'affichage à l'écran à décoder dans une ou plusieurs images suivantes tandis que le contenu d'affichage à l'écran est toujours actif sont ignorés, les vecteurs de mouvement associés sont nuls et le contenu image des macroblocs d'affichage à l'écran est remplacé par les données macroblocs qui sont déjà décodées avec la trame initiale correspondante.

10. Appareil conforme à l'une des revendications 7 à 9, dans lequel, dans le cas d'un contenu d'affichage à l'écran spécial tel qu'une barre simple, les données d'affichage à l'écran requises ne sont pas stockées dans la mémoire de données d'affichage à l'écran (ROM), mais générées séparément (OSDP) et enregistrées directement dans la mémoire d'image (FRAB).

11. Méthode conforme à l'une des revendications 1 à 6, dans laquelle les données d'affichage à l'écran de la mémoire de données d'affichage à l'écran sont chargées depuis un support de données distinct ou Internet.
